# EUROPEAN PATENT SPECIFICATION

(11) **EP 0 571 483 B1**
(45) Date of publication and mention of the grant of the patent: **20.12.1995**
(21) Application number: 92905108.4
(22) Date of filing: 20.02.1992
(51) Int. Cl.: B62D 1/18, F16D 3/06

(54) **VEHICLE STEERING COLUMN INCORPORATING AN ADJUSTABLE REACH FACILITY**
FAHRZEUGLENKSÄULE MIT EINER BEREICHVERSTELLEINRICHTUNG
COLONNE DE DIRECTION DE VEHICLE COMPRENANT UN DISPOSITIF DE POSITIONNEMENT REGLABLE

(30) Priority: 20.02.1991 GB 9103518
(43) Date of publication of application: 01.12.1993
(73) Proprietor: THE TORRINGTON COMPANY LIMITED, Coventry, Warwickshire CV4 9AE (GB)
(72) Inventor: HENRY-MOORE, Nicholas, Astcote Northamptonshire NN12 8NR (GB)
(74) Representative: Feakins, Graham Allan
(86) International application number: PCT/GB92/00298
(87) International publication number: WO 92/14639

(56) References cited:
- WO-A-87/03258
- DE-U- 8 806 563
- FR-A- 2 236 711
- GB-A- 2 236 168
- US-A- 3 399 549

## Description

This invention relates to a vehicle steering column incorporating an adjustable reach facility.

An adjustable reach facility is one which permits the steering column to be moved in an axial direction relative to itself so as to move the steering wheel to a position to suit the comfort of the driver. In order to achieve this, the steering column includes two parts which can slide relatively to one another.

GB-A-1 449 377 (corresponding to FR-A-2236711 and comprising the features defined in the preambles of claims 1 and 9) discloses a vehicle steering column with a coupling comprising a plurality of parts coupling to coaxial shaft portions positioned partially within the other. The coupling includes two tubular members mounted one behind the other and mounted in a resilient material to absorb vibrations.

WO-A-8703258 also discloses a steering column with inner and outer relatively axially movable telescopic shafts with polygonal shapes forming anti-vibration transmitting means requiring torsional displacement of one shaft relative to the other.

According to one aspect of the present invention, there is provided a vehicle steering column having a coupling between two portions of the steering column, which coupling incorporates a means for providing preloaded torque resistance to inhibit transmission of rotational backlash through the steering column, the coupling comprising a tubular torsion bush having first, second and third contiguous zones, the first and second zones being connected by the third zone, and the first and second zones being angularly offset one from the other prior to mounting the coupling on the column and are then twisted relatively to one another on the column, characterized in that the coupling is a unitary member and in that said third zone has at least one relieved portion to allow the twisting between the first and second zones.

One of the two parts can be a tube or hollow shaft, whilst the other of the two parts can be a hollow or solid shaft. With this arrangement, the torsion bush can be partially fitted inside one end of the hollow tube or shaft and another part of the torsion bush is fitted over one end of the other part.

The degree of angular offset or twist depends on the functional requirement but is preferably 1 to 5° from the longitudinal axis through a fixed zone preferably still 2° from the longitudinal axis through the fixed zone.

The shafts may be of any shape suitable to be coupled together by the coupling means so that rotational backlash does not occur and the coupling means is under constant torque. The shafts may be substantially rectangular in shape with curved shorter ends, the coupling means being dimensioned to couple together the shafts. The shafts may also be substantially triangular in shape with the coupling means dimensioned to couple together the shafts.

The degree of twist of the coupling means is termed the spring rate of the proposed torsion and is calculated from the following basic formula:-$\text{Θ =} \frac{\text{TL}}{\text{JG}}$
- Θ: = Angle of twist per unit length
- T: = Applied torque
- L: = Length of bush
- J: = Polar moment of inertia
- G: = Shear modulus of elasticity.

For different configurations made in similar materials the Polar moment of inertia is the only parameter which changes, i.e J = $\frac{\text{bh}}{\text{12}}$ (h² + b²) for rectangle.

According to another aspect of the present invention, there is provided a coupling for coupling two portions of a vehicle steering column, which coupling incorporates a means for providing pre-loaded torque resistance to inhibit transmission of rotational backlash through the steering column, the coupling comprising a tubular torsion bush having first, second and third contiguous zones, the first and second zones being connected by the third zone and the first and second zones being shaped for non-rotational engagement with the respective column portions and being angularly offset one from the other, characterised in that the coupling is a unitary member and in that said third zone has at least one relieved portion to allow twisting between the first and second zones.

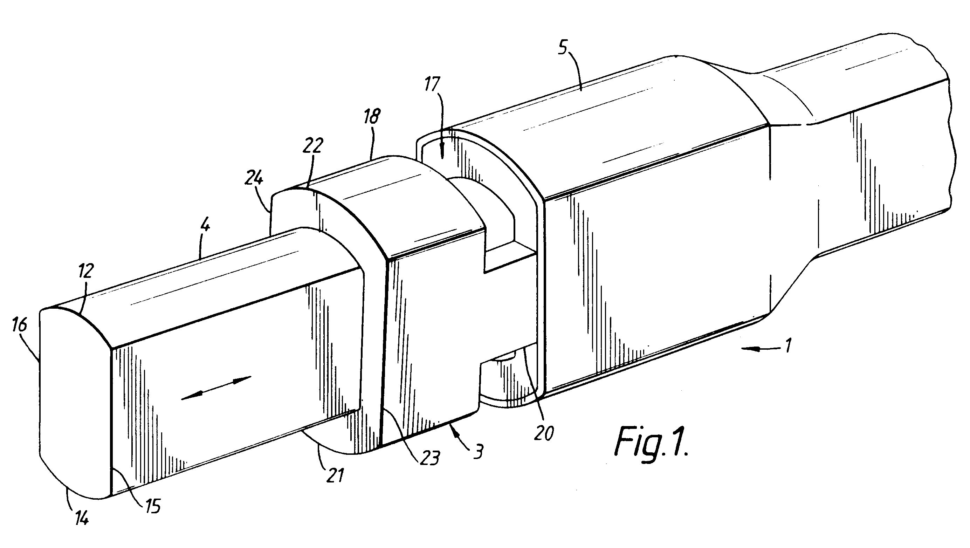

For a better understanding of the invention and to show how the same may be carried into effect, reference will now be made, by way of example, to the accompanying drawings in which:-
Figure 1 is a diagrammatic perspective view of part of a vehicle steering column incorporating an adjustable reach facility and coupling means according to one embodiment,
Figure 2 is a diagrammatic perspective view of an inner element shown in Figure 1 and showing more completely the construction of a coupling means shown in Figure 1,
Figure 3 is a view taken in the direction of the arrow B in Figure 2,
Figure 4 is a cross-sectional view of Figure 2 along the line C-C,
Figure 5 is a perspective view of an inner means and showing more completely the construction of a coupling means according to another embodiment, and
Figure 6 is a perspective view of an inner means and showing more completely the construction of a coupling means according to a further embodiment.

With reference to the drawings there is shown part of a vehicle steering column incorporating an adjustable reach facility 1 and a coupling means in the form of a torsion bush 3.

The adjustable reach facility 1 comprises hollow shaft 5, shaft 4 and the torsion bush 3. A zone 19 of the bush 3 is mounted in one end of the hollow outer shaft 5. The solid inner shaft 4 has one end slidably mountable within the bush 3 so that it can be moved in an axial direction relative to the shaft 5.

The outer shaft 5 is made of steel and is substantially rectangular in cross-section with curved shorter ends 6 and 7 and flat side walls 8 and 9 on both its outer and inner surfaces 10 and 11 respectively. The shaft 5 has an expanded portion at the one end so as to accommodate the inner shaft 4 and the torsion bush 3.

The inner shaft 4 has a substantially rectangular cross-section with curved shorter ends 12 and 14 and flat side walls 15 and 16 and is dimensioned so as to be slidably mountable within the torsion bush 3 and the shaft 5. The inner shaft 4 is the product of a cylinder originally having a diameter of 19 mm which was cut away to form the flat side walls 12 and 14 spaced 14 mm apart.

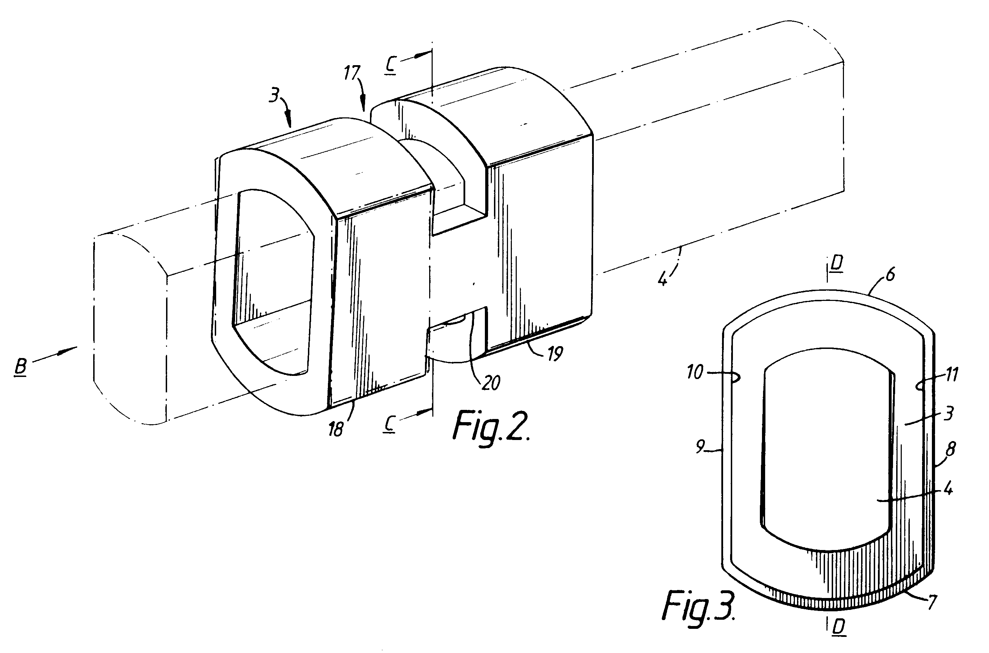

Specifically with reference to Figures 2 and 3 the torsion bush 3 is hollow and comprises first, second and third zones 18, 19 and 20 which are shown to be constructed continuously with one another, with the first and second zones 18 and 19 being connected by the third zone 20. The first and second zones 18 and 19 are arranged so that the longitudinal axis through the first zone 18 is offset by 2° from the longitudinal axis through the second zone 19, the longitudinal axis for the second zone being along the line D-D. Both the inner and outer surfaces of the first and second zones 18 and 19 have a substantially rectangular cross-section with curved shorter ends 21 and 22 and the flat side walls 23 and 24. The third zone 20 forms a cut-away section 17 enabling the first and second zones 18 and 19 to flex relative to each other.

The torsion bush 3 is arranged to couple together the inner and outer shafts 4 and 5 and its second zone 19 is mounted in the expanded portion of the outer shaft 5. The first zone 18 and connecting, third zone 20 extend outwardly of the expanded portion over the one end of the inner shaft 4.

With reference to Figure 2 the shaft 4 shown, in phantom, is mounted within the torsion bush 3. The change in alignment of the first zone 18, relative to the second zone 19 for the vehicle steering column in its assembled form, is indicated by broken lines and shows that in order for the shaft 4 to be mounted within the torsion bush 3 the first zone 18 must be flexed so that its longitudinal axis is along the line D-D corresponding with the longitudinal axis of the second zone 19. The dimension of the third zone 20 determines the degree of flex that can occur between the first and second zones 18 and 19. Therefore when the vehicle steering column is in its assembled form the torsion bush 3 is under constant torque which construction prevents rotational backlash of the inner and outer shafts 4 and 5.

This arrangement therefore has the advantage that the torsion bush 3 absorbs any rotational backlash between the inner and outer shafts 4 and 5 whilst maintaining the facility to transmit torque through the shafts 4 and 5.

In another embodiment, the inner shaft 4 may be a hollow shaft.

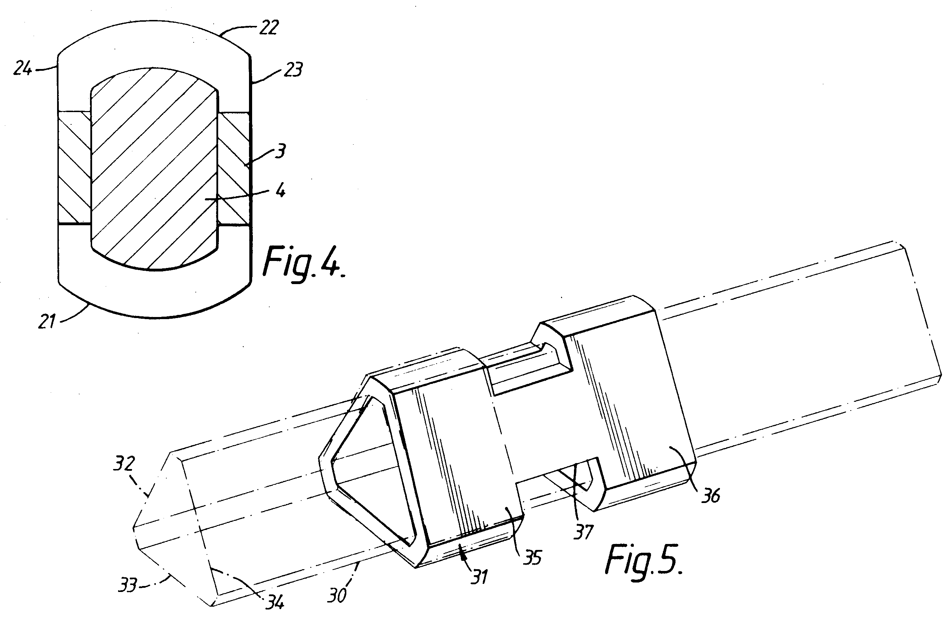

With reference to Figure 5 there is shown another embodiment wherein an inner solid tube 30 is slidably mounted within a coupling means 31. The tube 30 is substantially triangular in cross-section having three equilateral sides 32, 33 and 34.

The coupling means 31 has first, second and third zones 35, 36 and 37, the first and second zones 35 and 36 being connected by the cut away third zone 37. The first and second zones 35 and 36 are twisted relative to each other. The second zone 36 of the coupling means 31 is fixed to one end of an outer tube (not shown).

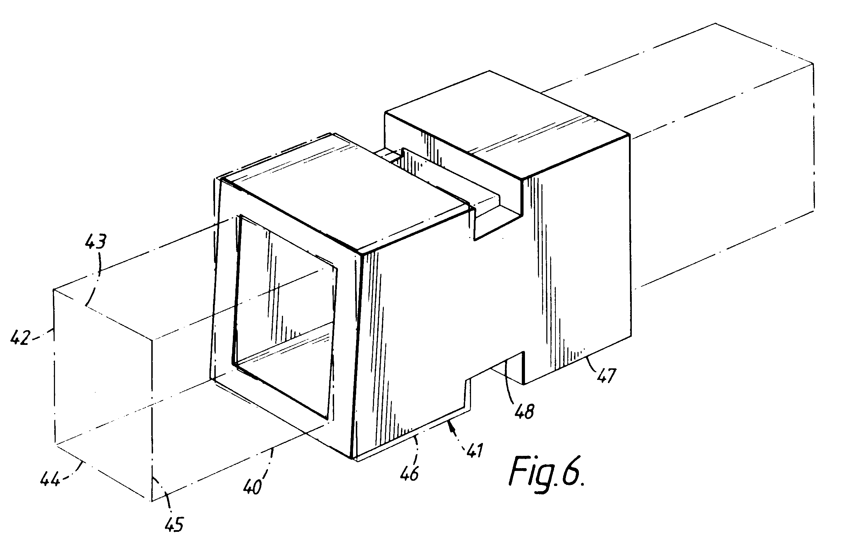

With reference to Figure 6 there is shown a further embodiment wherein an inner solid tube 40 is slidably mounted within a coupling means 41. The tube 40 is substantially square in cross-section having sides 42, 43, 44 and 45.

The coupling means 41 has first, second and third zones 46, 47 and 48, the first and second zones 46 and 47 being connected by the cut away third zone 48. The first and second zones 46 and 47 are twisted relative to each other.

The second zone 47 of the coupling means 41 is fixed to one end of an outer tube (not shown).

## Claims

1. A vehicle steering column having a coupling (1) between two portions (4, 5) of the steering column, which coupling incorporates a means for providing preloaded torque resistance to inhibit transmission of rotational backlash through the steering column, the coupling comprising a tubular torsion bush (3) having first, second and third contiguous zones (18, 19, 20), the first and second zones (18, 19) being connected by the third zone (20), and the first and second zones being angularly offset one from the other prior to mounting the coupling on the column and are then twisted relatively to one another on the column, characterised in that the coupling is a unitary member and in that said third zone has at least one relieved portion (17) to allow the twisting between the first and second zones.

2. A steering column according to claim 1, wherein the torsion bush (3) permits the two portions (4, 5) of the steering column to move axially with respect to one another.

3. A steering column according to claim 1 or 2, wherein the first and second zones are twisted from 1° to 5° from a longitudinal axis through a fixed zone.

4. A steering column according to claim 3, wherein the second zone (19) is the fixed zone and the second zone is fixedly mounted inside one portion (5) of the steering column such that the first and third zones extend from the second zone around the other portion (4) of the steering column which is slidably mounted within the torsion bush.

5. A steering column according to any one of the preceding claims, wherein the two portions of the steering column are hollow shafts.

6. A steering column according to any one of the preceding claims, wherein the tubular cross-sectional shape is double D.

7. A steering column according to any one of the preceding claims, wherein the tubular cross-sectional shape is rectangular.

8. A steering column according to any one of the preceding claims, wherein the tubular cross-sectional shape is triangular.

9. A coupling (1) for coupling two portions (4, 5) of a vehicle steering column, which coupling incorporates a means for providing pre-loaded torque resistance to inhibit transmission of rotational backlash through the steering column, the coupling comprising a tubular torsion bush (3) having first, second and third contiguous zones (18, 19, 20), the first and second zones (18, 19) being connected by the third zone (20) and the first and second zones being shaped for non-rotational engagement with the respective column portions and being angularly offset one from the other, characterised in that the coupling is a unitary member and in that said third zone has at least one relieved portion (17) to allow twisting between the first and second zones.

## Patentansprüche

1. Fahrzeuglenksäule mit einer Kupplung (1) zwischen zwei Abschnitten (4, 5) der Lenksäule, wobei die Kupplung eine Einrichtung zum Schaffen eines vorbelasteten Drehmomentwiderstands aufweist, um eine Übertragung von Drehspiel durch die Lenksäule hindurch zu unterbinden, wobei die Kupplung eine rohrförmige Torsionshülse (3) aufweist, die erste, zweite und dritte zusammenhängende Bereiche (18, 19, 20) hat, wobei die ersten und zweiten Bereiche (18, 19) durch den dritten Bereich (20) verbunden sind und wobei die ersten und zweiten Bereiche vor dem Montieren der Kupplung an der Säule winkelmäßig gegeneinander versetzt sind und dann relativ zueinander auf der Säule verdreht werden, dadurch **gekennzeichnet**, daß die Kupplung ein einstückiges Glied ist und daß der dritte Bereich wenigstens einen ausgesparten Abschnitt (17) hat, um das Verdrehen zwischen den ersten und zweiten Bereichen zuzulassen.

2. Lenksäule nach Anspruch 1, bei der die Torsionshülse (3) zulaßt, daß die beiden Abschnitte (4, 5) der Lenksäule sich axial in bezug aufeinander bewegen.

3. Lenksäule nach Anspruch 1 oder 2, bei der die ersten und zweiten Bereiche um 1° bis 5° gegenüber einer Längsachse durch einen festen Bereich verdreht sind.

4. Lenksäule nach Anspruch 3, bei der der zweite Bereich (19) der feste Bereich ist und der zweite Bereich innerhalb eines Abschnitts (5) der Lenksäule derart fest angebracht ist, daß die ersten und dritten Bereiche sich von dem zweiten Bereich um den anderen Abschnitt (4) der Lenksäule herum erstrecken, der gleitfähig innerhalb der Torsionshülse angebracht ist.

5. Lenksäule nach einem der vorhergehenden Ansprüche, bei der die beiden Abschnitte der Lenksäule hohle Wellen sind.

6. Lenksäule nach einem der vorhergehenden Ansprüche, bei der die rohrförmige Querschnittsgestalt doppelt D-förmig ist.

7. Lenksäule nach einem der vorhergehenden Ansprüche, bei der die rohrförmige Querschnittsgestalt rechtwinklig ist.

8. Lenksäule nach einem der vorhergehenden Ansprüche, bei der die rohrförmige Querschnittsgestalt dreieckig ist.

9. Kupplung (1) zum Kuppeln von zwei Abschnitten (4, 5) einer Fahrzeuglenksäule, wobei die Kupplung eine Einrichtung zum Schaffen eines vorbelasteten Drehmomentwiderstands aufweist, um eine Übertragung von Drehspiel durch die Lenksäule hindurch zu unterbinden, wobei die Kupplung eine rohrförmige Torsionshülse (3) aufweist, die erste, zweite und dritte zusammenhängende Bereiche (18, 19, 20) hat, wobei die ersten und zweiten Bereiche (18, 19) durch den dritten Bereich (20) verbunden sind und die ersten und zweiten Bereiche für einen nicht drehbaren Eingriff mit den entsprechenden Abschnitten der Säule gestaltet und winkelmäßig gegeneinander versetzt sind, dadurch **gekennzeichnet**, daß die Kupplung ein einstückiges Glied ist und daß der dritte Bereich wenigstens einen ausgesparten Abschnitt (17) hat, um ein Verdrehen zwischen den ersten und zweiten Bereichen zu gestatten.

## Revendications

1. Colonne de direction de véhicule ayant un accouplement (1) placé entre deux parties (4, 5) de la colonne de direction, l'accouplement comprenant un dispositif destiné à exercer une résistance préréglée sous forme d'un couple destiné à empêcher la transmission d'un jeu de rotation par la colonne de direction, l'accouplement comprenant un manchon tubulaire (3) de torsion ayant une première, une seconde et une troisième zone contiguës (18, 19, 20), la première et la seconde zone (18, 19) étant raccordées par la troisième zone (20), et la première et la seconde zone étant décalées angulairement l'une par rapport à l'autre avant le montage de l'accouplement sur la colonne et étant tendues l'une par rapport à l'autre sur la colonne, caractérisée en ce que l'accouplement est formé par un organe en une seule pièce, et en ce que la troisième zone a au moins une partie dégagée (17) destinée à permettre la torsion entre la première et la seconde zone.

2. Colonne de direction selon la revendication 1, dans laquelle le manchon de torsion (3) permet un déplacement axial des deux parties (4, 5) de la colonne de direction l'une par rapport à l'autre.

3. Colonne de direction selon la revendication 1 ou 2, dans laquelle la première et la seconde zone sont tordues d'un angle compris entre 1 et 5° autour de l'axe longitudinal dans une zone fixe.

4. Colonne de direction selon la revendication 3, dans laquelle la seconde zone (19) est la zone fixe, et la seconde zone est montée de manière fixe à l'intérieur d'une première partie (5) de la colonne de direction afin que la première et la troisième zone dépassent de la seconde zone autour de l'autre partie (4) de la colonne de direction qui est montée afin qu'elle puisse coulisser dans le manchon de torsion.

5. Colonne de direction selon l'une quelconque des revendications précédentes, dans laquelle les deux parties de la colonne de direction sont des arbres creux.

6. Colonne de direction selon l'une quelconque des revendications précédentes, dans laquelle la configuration tubulaire en coupe correspond à une double forme en D.

7. Colonne de direction selon l'une quelconque des revendications précédentes, dans laquelle la configuration tubulaire en coupe est rectangulaire.

8. Colonne de direction selon l'une quelconque des revendications précédentes, dans laquelle la configuration tubulaire en coupe est triangulaire.

9. Accouplement (1) destiné à accoupler deux parties (4, 5) d'une colonne de direction de véhicule, l'accouplement comprenant un dispositif destiné à exercer une résistance préréglée sous forme d'un couple pour empêcher la transmission d'un jeu en rotation par la colonne de direction, l'accouplement comprenant un manchon tubulaire (3) de torsion ayant une première, une seconde et une troisième zone contiguës (18, 19, 20), la première et la seconde zone (18, 19) étant raccordées à la troisième zone (20), et la première et la seconde zone ayant une configuration leur permettant de coopérer avec les parties respectives de colonne sans pouvoir tourner et d'être décalées angulairement l'une par rapport à l'autre, caractérisé en ce que l'accouplement est un organe en une seule pièce, et la troisième zone a au moins une partie dégagée (17) qui permet la torsion entre la première et la seconde zone.
